# EUROPEAN PATENT SPECIFICATION

(11) **EP 3 479 911 B1**
(45) Date of publication and mention of the grant of the patent: **09.09.2020**
(21) Application number: 17739716.3
(22) Date of filing: 30.06.2017
(51) Int. Cl.: B07C 5/14

(54) **AUTOMATIC EJECTION MODULE FOR CORK PLANKS AND CORK PLANK SELECTION SYSTEM BASED ON THE PLANK THICKNESS**
AUTOMASTISCHES AUSSONDERUNGSMODUL FÜR KORKPLATTEN UND KORKPLATTENSELEKTIERUNGSSYSTEM IN ABHÄNGIGKEIT DER PLATTENSTÄRKE
MODULE DE SEPARATION DES PLATEAUX DE LIÈGE ET SYSTÈME DE SÉLECTION SELON L'ÉPAISSEUR DES PLATEAUX DE LIÈGE

(30) Priority: 30.06.2016 PT 2016109498
(43) Date of publication of application: 08.05.2019
(73) Proprietor: Amorim Cork Research, Lda., 4535-186 Mozelos VFR (PT)
(72) Inventor: ALVES, Hugo Manuel Godinho, 7400-282 Ponte de Sor (PT); FERNANDES, José Pedro Viegas, 3475-037 Caramulo (PT)
(74) Representative: Alves Moreira, Pedro
(86) International application number: PCT/PT2017/050017
(87) International publication number: WO 2018/004365

(56) References cited:
- BE-A- 559 494
- PT-A- 102 070
- US-A- 1 349 836

## Description

### FIELD OF THE INVENTION

This invention relates to a cork plank automatic ejection module. The invention further relates to a cork plank selection system based on the plank thickness. The invention finds application in the cork industry, namely in the selection of cork planks according to its thickness.

### BACKGROUND OF THE INVENTION

Cork plank sorting by thickness is typically performed by operators who handle cork planks, one at a time, sorting them visually and by the sense of touch in order to select them so as to be able to stack them in an orderly fashion according to matching thicknesses.

The relative effectiveness of such a system is thus dependent on the skill and experience of operators in handling and estimating the thickness of the cork planks.

Given the nature of this sorting system, some adaptation time of the operator to the job is needed so that he/she will be able to perform it fully.

Furthermore, the profitability of such system is low, since the work rates are low due to its manual nature.

The existence of errors in the thickness sorting of cork planks is also a drawback.

Mechanical devices allowing these tasks to be performed automatically are not known in the industry.

PT 102070 discloses a process and an automatic device for the selection of cork planks on the basis of the determination of their thickness and roughness, using a light/shade system characterized by the oblique projection on the plank of a dark shaded area, limited by a shade line of high contrast whose relative distance from an imaginary reference line is calculated by computer means that analyse the images of the plank captured by the cameras, giving the value of the surface roughness of the plank and the position of the upper and lower surfaces thereof relative to a reference plane, which allows evaluation of its thickness. This also applies to cork stoppers.

BE-A-559494 as well US-A-1,349,836 relate to the field of sorting wood planks. BE-A-559494 discloses a process for classification of sawn timber, such as planks, in various lengths, on a rectangular grading table comprising a series of parallel compartments over which the planks are moved transversely, being the planks of mutually complementary lengths, substantially corresponding to the width of the classification table (the total length of the compartments), caused to fall in the same compartment, longitudinally relative to each other. US-A-1,349,836 discloses a sorting device for sawn wood in which wood pieces are transported along a feeding runaway below which collecting compartments for the different sorts are provided, movable devices being arranged in the runaway and adapted to effect automatically the sorting.

Therefore, there is a need in the art for a cork plank automatic ejection module, as well as for a cork plank sorting system using thickness that are able to overcome the mentioned above drawbacks.

### SUMMARY OF THE INVENTION

The present invention relates to a cork plank automatic ejection module (1), comprising a frame (2) that comprises a cork plank inlet (3) and a first cork plank outlet (4) through which said planks are ejected out of the module (1), characterized in that it further comprises a cork plank extracting member (5) able to be displaced along two overlapping planes (PI, P2), wherein a first plane (P1) defines an advance direction of the extracting member (5) for ejection of a cork plank, through the first cork plank outlet (4), and a second plane (P2) disposed above first plane (P1) defines a rearward direction of extracting member (5).

Preferably, the ejection module (1) further comprises a cork plank position sensor (6) for automatic determination of the relative position of the cork plank in the module (1).

In one embodiment, said frame (2) further comprises a second cork plank outlet (7), allowing an alternative exit of cork planks from module (1).

In another embodiment, the cork plank automatic ejection module (1) further comprises a removable barrier (8) for holding cork planks, disposed adjacent to second outlet (7) in order to hold a cork plank in module (1) before being ejected. Preferably, said removable barrier (8) is vertically displaceable between a cork plank holding position and a cork plank passage position.

Most preferably, the cork plank extracting member (5) is disposed on the frame (2).

The invention further relates to a cork plank automatic selection system (9) characterized in that it comprises:
- a cork plank conveyor device (10),
- a cork plank thickness automatic reading device (11) connected in data communication to a central processing unit (12);
- at least two cork plank ejecting modules (1) claimed in any one of the preceding claims,
wherein:
said at least two ejection modules (1) are disposed downstream of the automatic reading device (11) and in series with each other, said modules (1) being fed with cork planks by said conveyor device (10);
each ejection module (1) is configured to eject cork planks having a predetermined thickness range, and
each ejection module (1) is connected in data communication to the central processing unit (12) which is configured to select the respective ejection module (1) based on thickness information received from the automatic reading device (11).

In one embodiment of the system (9), the cork plank conveyor device (10) is a moving mat or a conveyor belt.

In one preferred embodiment, the selection system (9) comprises seven cork plank ejection modules (1) such as explained above.

### BRIEF DESCRIPTION OF THE DRAWINGS

The following is a description of the invention with reference to the accompanying drawings, in which:
Fig. 1 is a perspective view of one embodiment of the ejection module of the invention, in which are visible, among other components, the exemplary planes on which the extracting member is displaced, and a cork plank conveyor belt that feeds the module.
Fig. 2 is a perspective view of the embodiment of Fig. 1 in which the extracting member is located in the readiness initial position, before a cork plank is ejected.
Fig. 3 shows the module in Fig. 2, wherein the extracting member has advanced along plane P1 in order to eject a cork plank.
Fig. 4 shows the module in Fig. 3, wherein the extracting member is located in a raised position in order to start the rearward movement into its readiness position without constituting hindrance to the entry of a new cork plank into the module.
Fig. 5 shows the module in Fig. 4, wherein the extracting member has moved back along plane P2 to a pullback position near the initial readiness position.
Fig. 6 is a perspective view of a preferred embodiment of the plank selection system of the invention.

### DETAILED DESCRIPTION OF THE INVENTION

The present invention relates to a cork plank automatic ejection module, as well as to a cork plank automatic selection system, which selection is based on plank thickness ranges.

The present invention finds application in the cork industry, namely in selection of cork planks according to their thickness.

Within the context of the present description, the term "comprising" is to be understood as "including, among others". As such, said term should not be interpreted as "consisting only of".

The expression "cork plank" relates to a cork material plank having a length which can vary typically between 300 mm and 2500 mm. In cork industry, cork planks are selected based on the value of their thickness and not their length.

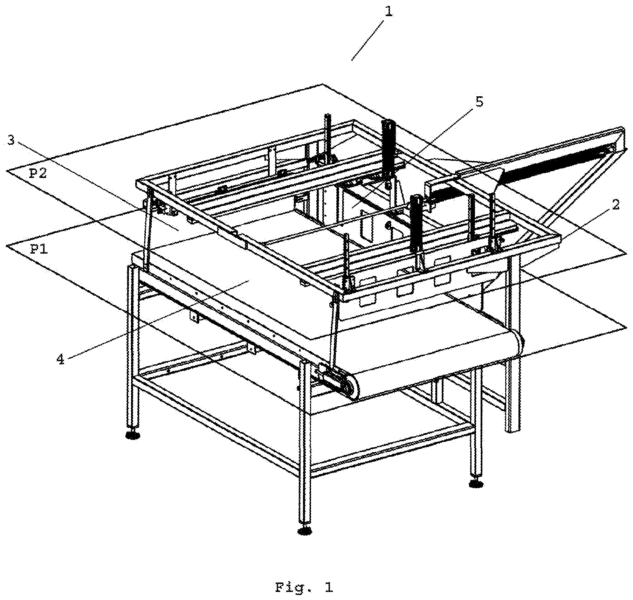

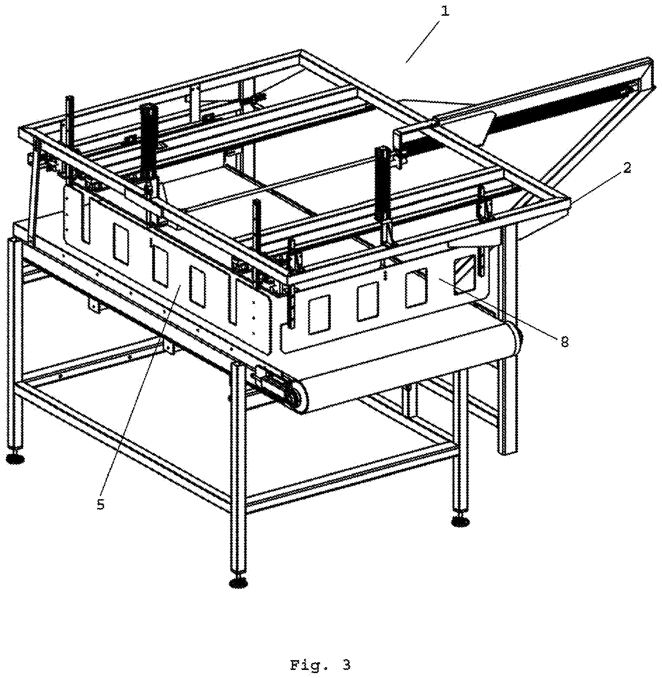

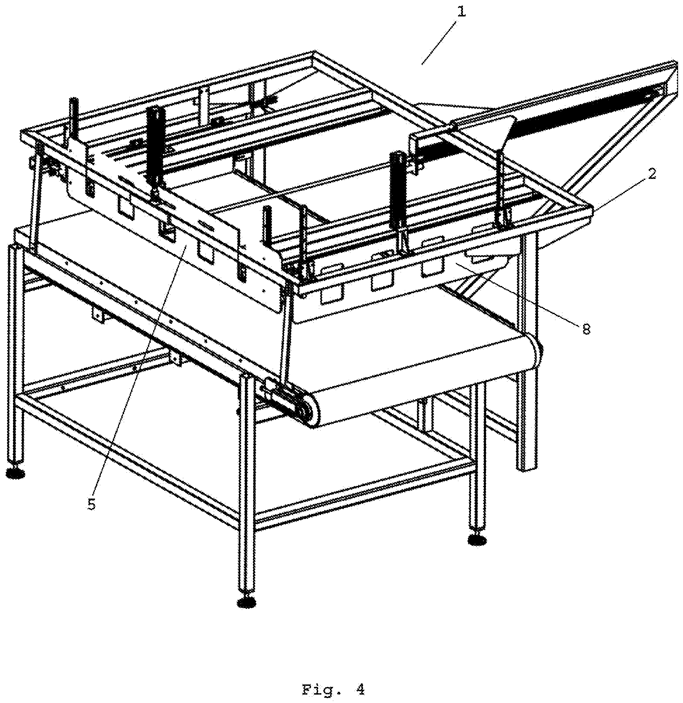

With reference to Fig. 1 to 5, the cork plank automatic ejection module (1) of the present invention comprises a frame (2) comprising a cork plank inlet (3) and a first cork plank outlet (4) through which said planks are ejected out of the module (1). Module (1) further comprises a cork plank extracting member (5) able to be displaced along at least two planes (PI, P2) not coplanar with each other, as exemplified in Fig. 1, wherein a first plane (P1) defines an advance direction of the extracting member (5) for ejection of a cork plank through the first cork plank outlet (4), and a second plane (P2) disposed above first plane (P1) defines a rearward direction of the extracting member (5).

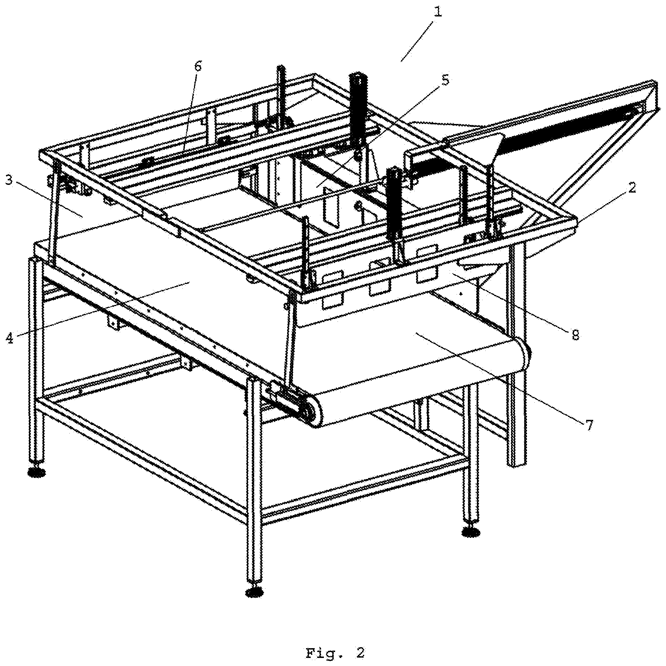

For better understanding, a cork plank is admitted into the module (1) through its inlet (3). Then, the extracting member (5) advances along plane (PI), which is the working plane where the cork plank is situated, in order to expel the latter through the first cork plank outlet (4). Fig. 2 exemplifies the final position of extracting member (5) after ejection of a cork plank.

After this forward movement of extracting member (5) in order to eject a cork plank, the same extracting member (5) must be pulled back to its initial position, also called readiness position, from which it may advance to obtain the ejection of another plank. The present invention envisages that this pullback is carried out along a plane (P2) situated at a level higher than the working plane (PI), in order to allow a new cork plank to enter into the module (1) and under extracting member (5) while it resumes its functional position for further ejection. For this reason, the return movement of extracting member (5) does not interfere with the cork planks entering into the module (1). These movements of extracting member (5) are sequentially exemplified in Fig. 2 to 5. This feature saves time and allows providing module (1) with higher productivity.

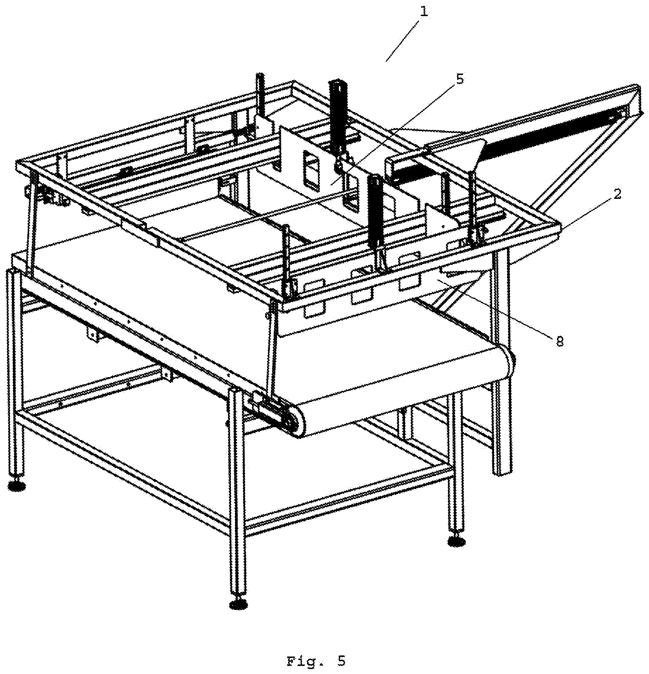

It should be noted that planes (PI, P2) need not necessarily be parallel, as in the accompanying figures, although they have to comply with the condition of not being coplanar and being at a distance of each other by a minimum distance allowing the entry of a cork plank into module (1) when extracting member (5) is pulled back from the ejection position to the pullback position (Fig. 5) before assuming the readiness position.

The shape of the extracting member (5) will be chosen by a person skilled in the art in order to fulfill the technical function, as explained. By way of example and not limitation, member (5) is a member of the dragging spatula type, as is shown in figures.

In a preferred embodiment, the cork plank automatic ejection module (1) further comprises a cork plank position sensor (6) for automatic determination of the relative position of the cork plank in the module, in particular on the work plane (P1).

Most preferably, said frame (2) of cork plank automatic ejection module (1) further comprises a second cork plank outlet (7), which allows selecting planks having a certain thickness to be ejected through first outlet (4), and letting other planks that do not have the selected thickness to leave module (1), in this case through second outlet (7).

In another preferred embodiment, the cork plank automatic ejection module (1) further comprises a removable barrier (8) for holding cork planks, disposed adjacent to second outlet (7) in order to hold a cork plank in module (1) before being ejected, thereby preventing that a plank selected for ejection improperly exits module (1) through second outlet (7). Said removable barrier (8) can be vertically displaceable between a cork plank holding position and a cork plank passage position, for example moving upwards such that the cork plank can pass, and moving downwards to block this passage. An example of the operation of said removable barrier (8), when it is provided, is shown in the sequence of Fig. 2 to 5.

In another embodiment of the invention, cork plank extracting member (5) is a part of frame (2).

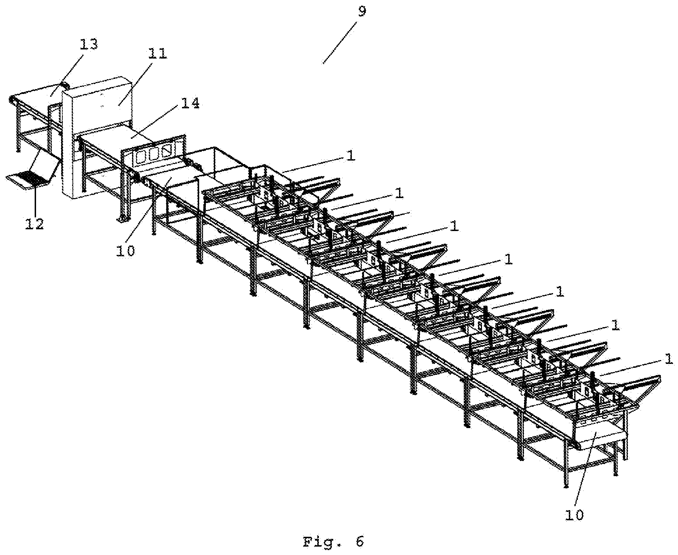

With reference to Fig. 6, the present invention further relates to a cork plank automatic selection system (6).

System (9) comprises:
- a cork plank conveyor device (10),
- a cork plank thickness automatic reading device (11) connected in data communication to a central processing unit (12); and
- at least two cork plank ejecting modules (1), such as described previously, disposed downstream of automatic reading device (11) and in series with each other, said modules (1) being fed with cork planks by said conveyor device (10); each ejection module (1) is configured to eject cork planks having a predetermined thickness range; and each ejection module (1) is connected in data communication to central processing unit (12) which is configured to select the respective ejection module (1) based on thickness information received from automatic reading device (11).

When passing through the cork plank thickness automatic reading device (11), the thickness of each cork plank is determined.

The collected information about the cork plank thickness is communicated to central processing unit (12), which defines which ejection module (1) will act on that plank. Thereby, for example, the combination of 7 modules (1) in series in this system (9) will enable the selection of seven different plank thickness ranges, which planks will be arranged according to such thickness ranges without any human intervention.

Thus, each ejection module (1) is connected in data communication to the central processing unit (12), which is configured to select the respective ejection module (1) based on thickness information received from the automatic reading device (11), as already mentioned.

Preferably, the cork plank conveyor device (10) is a moving mat or a conveyor belt. In one embodiment, such mat is a linear mat that runs through all modules (1) arranged in series.

In one embodiment, cork plank automatic selection system (9) additionally comprises a cork plank receiving mat (13) disposed upstream of the reading device (11), such mat (13) being used to feed said device (11). Cork planks are placed on mat (13) either manually or mechanically.

In another embodiment, system (9) further comprises a cork plank holding mat (14) disposed between device (11) and conveyor device (10), mat (14) being used to define entry times of the cork planks into conveyor device (10). Thus, conveyor device (10) may have a constant speed of operation.

Note, however, that conveyor device (10) may have operating variable speeds regardless of the existence of holding mat (14).

Operation of extracting member (5) is identical to operation mentioned above with reference to the ejection module (1).

In operation, when a particular cork plank does not have a certain thickness such as to be ejected in a given ejection module (1), such plank goes through such a module (1) and exits through second plank outlet (7) thereof, being displaced on conveyor device (10) towards next module (1). Such a situation is repeated until such plank cork enters into module (1) determined by processing unit (12), where it is removed through first outlet (4) of such module (1) acted upon by its extracting member (5).

In terms of exemplary operation of one embodiment of the system of the invention, when a cork plank enters into the ejection module (1) from which will be ejected, it is identified by a position sensor (6), which triggers a removable barrier (8) for example via an actuator, so that the cork plank displacement to next module (1) will be prevented by the removable barrier (8).

The system (9) of the invention can work continuously, and has a minimum ejection capacity of a piece in each gate every four seconds, i.e. 15 pieces per minute.

The description herein should be understood as exemplary and not limiting the scope of the present invention, which is set forth in the appended independent claims, the dependent claims being used to set forth particular embodiments of the invention.

The present invention finds application in the cork industry, namely in selection of cork planks according to its thickness.

## Claims

1. An cork plank automatic ejection module (1), comprising a frame (2) that comprises a cork plank inlet (3) and a first cork plank outlet (4) through which said planks are ejected out of the module (1), **characterized in that** it further comprises a cork plank extracting member (5) able to be displaced along two overlapping planes (PI, P2), wherein a first plane (P1) defines an advance direction of the extracting member (5) for ejection of a cork plank, through the first cork plank outlet (4), and a second plane (P2) disposed above first plane (P1) defines a rearward direction of the extracting member (5).

2. The cork plank automatic ejection module (1) according to claim 1, **characterized in that** it further comprises a cork plank position sensor (6) for automatic determination of the relative position of the cork plank in the module (1).

3. The cork plank automatic ejection module (1) according to claim 1 or 2, **characterized in that** said frame (2) further comprises a second cork plank outlet (7), allowing an alternative exit of cork planks from module (1).

4. The cork plank automatic ejection module (1) according to claim 3, **characterized in that** it further comprises a removable barrier (8) for holding cork planks, disposed adjacent to the second outlet (7) for holding a cork plank in the module (1) before being ejected.

5. The cork plank automatic ejection module (1) according to claim 4, **characterized in that** the removable barrier (8) is vertically displaceable between a cork plank holding position and a cork plank passage position.

6. The cork plank automatic ejection module (1) according to any one of the preceding claims, **characterized in that** the cork plank extracting member (5) is disposed on the frame (2).

7. A cork plank automatic selection system (9) **characterized in that** it comprises:
• a cork plank conveyor device (10),
• a cork plank thickness automatic reading device (11) connected in data communication to a central processing unit (12);
• at least two cork plank ejecting modules (1) claimed in any of the preceding claims,
wherein:
the said at least two ejection modules (1) are disposed downstream of the automatic reading device (11) and in series with each other, said modules (1) being fed with cork planks by said conveyor device (10);
each ejection module (1) is configured to eject cork planks having a predetermined thickness range, and
each ejection module (1) is connected in data communication to the central processing unit (12) which is configured to select the respective ejection module (1) based on thickness information received from the automatic reading device (11).

8. The selection system (9) according to claim 7, **characterized in that** the cork plank conveyor device (10) is a moving mat or a conveyor belt.

9. The selection system (9) according to claim 7 or 8, **characterized in that** it comprises seven cork plank ejection modules (1).

## Patentansprüche

1. Automatisches Auswurfmodul (1) für Korkbretter, umfassend einen Rahmen (2), der einen Korkbretteinlass (3) und einen ersten Korkbrettauslass (4) umfasst, durch den die besagten Bretter aus dem Modul (1) ausgeworfen werden, **gekennzeichnet durch** dass es ferner ein Korkbrett-Ausziehelement (5) umfasst, das entlang zweier überlappender Ebenen (P1, P2) verschoben werden kann, wobei eine erste Ebene (P1) eine Vorwärtsrichtung des Ausziehelements (5) zum Auswerfen eines Korkbrettes durch den ersten Korkbrettauslass (4) definiert und eine zweite Ebene (P2), die über der ersten Ebene (P1) angeordnet ist, eine Rückwärtsrichtung des Ausziehelements (5) definiert.

2. Automatisches Auswurfmodul (1) für Korkbretter nach Anspruch 1, **dadurch gekennzeichnet, dass** es ferner einen Korkbrett-Positionssensor (6) zur automatischen Bestimmung der relativen Position des Korkbrettes im Modul (1) umfasst.

3. Automatisches Auswurfmodul (1) für Korkbretter nach Anspruch 1 oder 2, **dadurch gekennzeichnet, dass** der Rahmen (2) ferner einen zweiten Korkbrettauslass (7) umfasst, der einen alternativen Austritt von Korkbrettern aus dem Modul (1) ermöglicht.

4. Automatisches Auswurfmodul (1) für Korkbretter nach Anspruch 3, **dadurch gekennzeichnet, dass** es ferner eine entfernbare Barriere (8) zum Halten von Korkbretter aufweist, die neben dem zweiten Auslass (7) zum Halten eines Korkbrettes im Modul (1) vor dem Auswerfen angeordnet ist.

5. Automatisches Auswurfmodul (1) für Korkbretter nach Anspruch 4, **dadurch gekennzeichnet, dass** die entfernbare Barriere (8) zwischen einer Halteposition für Korkbretter und einer Durchgangsposition für Korkbretter vertikal verschoben werden kann.

6. Automatische Auswurfmodul (1) für Korkbretter nach einem der vorhergehenden Ansprüche, **dadurch gekennzeichnet, dass** das Korkbrett-Ausziehelement (5) auf dem Rahmen (2) angeordnet ist.

7. Automatisches Auswahlsystem (9) für Korkbretter, das **dadurch gekennzeichnet ist, dass** es Folgendes umfasst:
• eine Korkbretterfördervorrichtung (10),
• eine automatische Lesevorrichtung (11) für die Dicke der Korkbretter, die in Datenkommunikation mit einer Zentralverarbeitungseinheit (12) verbunden ist;
• mindestens zwei Korkbrett-Auswurfmodule (1), die in einem der vorhergehenden Ansprüche beansprucht sind,
wobei:
die besagten mindestens zwei Auswurfmodule (1) stromabwärts der automatischen Lesevorrichtung (11) und in Reihe miteinander angeordnet sind, wobei die besagten Module (1) von der Fördervorrichtung (10) mit Korkbrettern gespeist werden;
jedes Auswurfmodul (1) ist ausgebildet, um Korkbretter mit einem vorbestimmten Dickenbereich auszuwerfen, und
jedes Auswurfmodul (1) ist in Datenkommunikation mit der Zentralverarbeitungseinheit (12) verbunden, die ausgebildet ist, um das jeweilige Auswurfmodul (1) auszuwählen, aufgrund von Dickeninformationen, die von der automatischen Lesevorrichtung (11) empfangen wurden.

8. Auswahlsystem (9) nach Anspruch 7, **dadurch gekennzeichnet, dass** die Korkbretterfördervorrichtung (10) eine bewegliche Matte oder ein Förderband ist.

9. Auswahlsystem (9) nach Anspruch 7 oder 8, **dadurch gekennzeichnet, dass** es sieben Korkbrett-Auswurfmodule (1) umfasst.

## Revendications

1. Module (1) d'éjection automatique de planches de liège, comprenant un châssis (2), qui comprend à son tour une entrée (3) de planche de liège et une première sortie (4) de planche de liège, à travers laquelle lesdites planches sont éjectées hors du module (1), **caractérisé en ce qu'**il comprend en outre un élément (5) d'extraction de planche de liège pouvant être déplacé le long de deux plans (P1, P2) de chevauchement, dans lequel un premier plan (P1) définit une direction d'avance de l'élément (5) d'extraction pour l'éjection d'une planche de liège, à travers la première sortie (4) de planche de liège, et un deuxième plan (P2) disposé au-dessus du premier plan (P1) définit une direction de recul de l'élément (5) d'extraction.

2. Module (1) d'éjection automatique de planches de liège selon la revendication 1, **caractérisé en ce qu'**il comprend en outre un capteur (6) de position de planche de liège, pour la détermination automatique de la position relative de la planche de liège dans le module (1).

3. Module (1) d'éjection automatique de planches de liège selon la revendication 1 ou 2, **caractérisé en ce que** ledit châssis (2) comprend en outre une seconde sortie (7) de planche de liège, permettant une sortie alternative des planches de liège du module (1).

4. Module (1) d'éjection automatique de planches de liège selon la revendication 3, **caractérisé en ce qu'**il comprend en outre une barrière (8) amovible pour retenir des planches de liège, disposée à côté de la seconde sortie (7) pour retenir une planche de liège dans le module (1) avant d'être éjectée.

5. Module (1) d'éjection automatique de planches de liège selon la revendication 4, **caractérisé en ce que** la barrière (8) amovible peut être déplacée verticalement entre une position de maintien de planche de liège et une position de passage de planche de liège.

6. Module (1) d'éjection automatique de planches de liège selon l'une quelconque des revendications précédentes, **caractérisé en ce que** l'élément (5) d'extraction de planche de liège est disposé sur le châssis (2).

7. Système (9) de sélection automatique de planches de liège **caractérisé en ce qu'**il comprend:
• Un dispositif (10) de transport de planches de liège,
• Un dispositif (11) de lecture automatique d'épaisseur de planches de liège connecté en communication de données à une unité (12) centrale de traitement;
• Au moins deux modules (1) d'éjection de planches de liège selon l'une quelconque des revendications précédentes, dans lesquels:
Lesdits au moins deux modules (1) d'éjection sont disposés en aval du dispositif (11) de lecture automatique et en série l'un avec l'autre, lesdits modules (1) étant alimentés en planches de liège par ledit dispositif (10) de transport;
Chaque module (1) d'éjection est configuré pour éjecter des planches de liège ayant une gamme d'épaisseur prédéterminée et
Chaque module (1) d'éjection est connecté en communication de données à l'unité (12) centrale de traitement, qui est configurée pour sélectionner le module (1) d'éjection respectif, basée sur des informations d'épaisseur reçues du dispositif (11) de lecture automatique.

8. Système (9) de sélection selon la revendication 7, **caractérisé en ce que** le dispositif (10) de transport de planches de liège est un tapis mobile ou une bande transporteuse.

9. Système (9) de sélection selon la revendication 7 ou 8, **caractérisé en ce qu'**il comprend sept modules (1) d'éjection de planches de liège.
